# EUROPEAN PATENT APPLICATION

(11) **EP 2 073 162 A1**
(43) Date of publication of application: **24.06.2009**
(21) Application number: 07150365.0
(22) Date of filing: 21.12.2007
(51) Int. Cl.: G06Q 30/00

(54) **A computer-based data processing method and system for processing sets of data for identifying and describing a plurality of sales objects and purchase objects from traders**

(71) Applicant: Dyring-Andersen, Søren, 3480 Fredensborg (DK); Hofflund, Martin Arvidsen, 4070 Kirke Hyllinge (DK)
(72) Inventor: Dyring-Andersen, Søren, 3480 Fredensborg (DK); Hofflund, Martin Arvidsen, 4070 Kirke Hyllinge (DK)
(74) Representative: Holme Patent A/S

(57) **Abstract**

A computer-based data processing method and system serves for processing sets of data for identifying and describing a plurality of sales objects and purchase objects from traders. At least one first vendor submits at least one first vendor data set for at least one first sales object to a database, at least one first purchaser submits at least one first purchaser data set for at least one first purchase object to a database, and processing and matching the vendor data sets and the purchaser data sets to identify at least the best match for the at least one first vendor data set and the at least one first purchaser data set stored in the database, identifying a consecutive series of intermediate vendor data sets and purchaser data sets, wherein identifying a consecutive series comprises the steps of identifying a first intermediate traders having vendor data sets and a purchaser data sets.

## Description

The present invention relates to a computer-based data processing method for processing sets of data for identifying and describing a plurality of sales objects and purchase objects from traders, which method comprises that at least one first vendor submits at least one first vendor data set for at least one first sales object to a database on a data storage means, at least one first purchaser submits at least one first purchaser data set for at least one first purchase object to a database on a data storage means, and processing and matching the vendor data sets and the purchaser data sets to identify at least the best match for the at least one first vendor data set and the at least one first purchaser data set stored in the database.

To buy an object like a car is often from an economical point of view a big and burdensome issue; in addition, such an object is bulky. This makes it problematic when a new object is bought before the sale of the old one. The same is true for boats, airplanes and real estates. At the other hand, for many people in today's society they cannot do without a car, not even for just a day.

One possibility for the vendor/purchaser is to sell/purchase the object him-/herself. Nowadays, when an advertisement on the web can be read by nearly the whole world the number of possible purchasers is very large. In spite of that such a search procedure normally requires spending a lot of time for the purchaser.

Another solution is to use dealers. The dealer e.g. in cars buys the customer's car if the customer finds the car to buy at said dealer. The amount the dealer pays for the customer's car is money bound to that car. Bound money, the dealer wants to get paid for. Therefore, there is normally a margin between what the dealer pays for a car and what he asks for it. The longer time the dealer assumes he needs to keep the car before he can sell it the less the dealer wants to pay for it.

In summary buying and selling a car or any other cost-consuming marketable sales object within a limited circle of interested consumers could take a lot time, and be risky business if buying the new object is done before the consumers own object is sold. The consumer is faced with the major dilemma of choosing between to purchase in due time before the sales object he is interested in purchasing is bought by others, and investing in this purchase prior to having realized his own assets which should finance his purchase. Often the consumer must amortize double for both the new purchase and his original assets or object for a very long period of time before an interested purchaser turns up and purchases his old asset. This situation is not satisfactory. The market fluctuation of many of such cost-consuming marketable sales is obstructed or substantially down-sized and many people become insolvent.

Therefore, it is important that purchase and sale occur at the same time, or at substantially the same time to minimize these disadvantages the most.

In a first aspect according to the present invention is provided a method and a system to connect purchasers and vendors so that they faster than before can find each other.

In a second aspect according to the present invention is provided a method and a system to connect purchasers and vendors in a way that reduces the time spent by the purchasers and vendors to find each other.

In a third aspect according to the present invention is provided a method and a system to reduce the time spent by the users to purchase and sell an object.

In a fourth aspect according to the present invention is provided a method and a system to avoid the situation where money is locked due to the purchase of a new object before the old one not needed anymore is sold.

In a fifth aspect according to the present invention is provided a method and a system to avoid the situation where one object is missing due to sale preceding purchase.

The novel and unique whereby this is achieved according to the present invention consists in that the computer-based data processing method comprises identifying a consecutive series of intermediate vendor data sets and purchaser data sets, wherein identifying a consecutive series comprises the steps of identifying a first intermediate trader having a first intermediate vendor data set and a first intermediate purchaser data set, matching the first intermediate purchaser data set with the at least one first vendor's vendor data set, if there is no match between first intermediate vendor data set and first purchaser's purchaser data set, identifying a second intermediate trader having a second intermediate purchaser data set matching the first intermediate vendor data set, and repeating the matching until an intermediate purchaser data set matches the at least one first purchaser's purchaser data set.

In this way somebody who wants to sell an object and purchase another one can use the system to find the best purchaser and vendor minimizing time spent to find them. In addition, both trades can take place at the same time, so that no money is locked due to the purchase of a new object before the old one not needed anymore is sold, so that the situation where one object is missing due to sale preceding purchase is avoided.

In an advantageously embodiment of the invention the first vendor can have a purchaser data set also and the first purchaser can have a vendor data set also, so that first vendor's purchaser data set matches the first purchaser's vendor data set, which means that all traders want to both purchase and sell objects. In this case the consecutive series is actually a loop. Especially if the loop involves many traders the present invention will be very useful.

A series of traders is broken if just one of them resigns from the database, e.g. if one trader decides not to sell after all or finds a suitable purchase object through another route. In order to always provide an effective availability of sales objects of interest and comply with and offer an uninterrupted supply and demand chain, a subsidiary series of other traders is created automatically that mends the first series.

In a preferred embodiment of the invention an intermediate trader can be extended to a hierarchic group of intermediate traders of decreasing matching degree, wherein if the intermediate trader having the highest matching degree of the hierarchic group leaves the group the next intermediate trader automatically can become the substitute. The longer the consecutive series of traders, the proner the series is to break. By replacing one trader with another one with similar interests advantageously minimizes the risk that the series will break again due to the fact that the probability that two traders in a consecutive series share exactly the same interest are low. Otherwise selling and purchasing cost-consuming objects would not be a problem.

The inventive method is well suited to optimize procedures involving sales objects and purchase objects that are bulky and which people need everyday but where dual ownership is too expensive. Such objects can e.g. be selected from the group comprising real estate, cars, boats, and airplanes. Since there is a big difference between the price of travel tickets sold by travel agencies and second-hand tickets, the system is well suited for travel tickets as well.

For a trade to be implemented information identifying a vendor, a purchaser, one or more objects to be traded, costs involved in the trade, and an agreement about the price. In addition, these parameters must be fulfilled at the same time. Therefore, the sets of data for identifying and describing a plurality of sales objects and purchase objects from traders comprise at least information comprising identification of the sales or purchase object, identification of the trader, costs, and time window, which time window is to be understood as a certain date or date interval between which the trade must be completed.

The invention also relates to a system that comprises means for identifying a consecutive series of intermediate vendor data sets and purchaser data sets, wherein the means for identifying a consecutive series comprises means for identifying a first intermediate trader having a first intermediate vendor data set and a first intermediate purchaser data set, means for matching the first intermediate purchaser data set with the at least one first vendor's vendor data set, means for identifying a second intermediate trader having a second intermediate purchaser data set matching the first intermediate vendor data set if there is no match between first intermediate vendor data set and first purchaser's purchase data set, and means for repeating the matching until an intermediate vendor data set matches the at least one first purchaser's purchaser data set.

This system is particular suited for implementation of the computer-based data processing method discussed and described above, in which case the system is able to store, compute and work with large numbers of input data. The more input data in the database the better the chance for finding an optimum consecutive series and a subsequent perfect match in a minimum time. Hence, the inventive system is timesaving, easy to overview, provides a large number of suitable hits and saves money. It is expected that this new system and method may reduce debt collection, enforcement proceedings and sales by order of the court substantially. Accordingly, the system and method according to the present invention is of considerable public interest.

The means to identify a consecutive series of intermediate vendor data sets and purchaser data sets includes input means, comparative means and analyzing means. The input means can for example include scanning, typing the information on a keyboard or somebody writing the information in a card index. If scanning is used the means to identify what is written is added to the system. The storage means for the input data may e.g. be hard discs or laser discs, however the data sets could also be stored on a card index. The data sets preferably comprise parameters where each parameter has a certain value or has values in a certain range. The comparative means, e.g. a computer program stored on the central computer, compares each parameter of a vendor data set with the same parameter of a purchaser data set. If the values of each parameter of the two data sets overlap, the data sets are placed next to each other in the consecutive series. Then the same storage means mentioned above are used to store the new consecutive series. Finally, the analyzing means, e.g. a computer program stored on the central computer, investigates whether the consecutive series starts with a first vendor and finishes with a first purchaser. The analyzing means can be a person looking in the card index or the computer program checking there are no free, non-matched data sets at the ends of the consecutive series.

There is also the possibility that the first vendor can have a purchaser data set and the first purchaser can have a vendor data set, and that the first vendor's purchaser data set matches the first purchaser's vendor data set. In this way a complete consecutive series can be accomplished even though there is not a first vendor with only sale interest and a first purchaser with only purchase interest. The means for identifying a trader, the means for processing and matching the vendor data sets and the purchaser data sets, and the means for identifying a consecutive series of intermediate vendor data sets and purchaser data sets may in the preferred embodiment include computer programs, which may be stored on a central computer, mainframe and/or on a backup system.

The computer-based data processing system can in the preferred embodiment comprise means for online access via the Internet, which makes it possible for anybody to use the program from any access site, including but not limited to home. The means can be a homepage for accessing a central computer or a mainframe implemented with the computer-based data processing system. Data sets can be entered via the homepage and the home page will, after some processing in the specifically designed computer programs on the central computer, return information of owners of possible purchase and sale objects for the survey of the trader who has logged on to the computer-based data processing system via the homepage.

A high degree of security preventing unauthorized personal from getting access to confidential information is obtained if the computer-based data processing system comprises means for obtaining online access to the system or comprises a hardware lock means or a user interface means requiring passwords and user ID.

The invention will be explained in greater detail below, describing preferred embodiments with reference to the drawings, in which
fig. 1 shows schematically a flow sheet illustrating cars arranged according to the invention so that purchase and sale interests of the owners match,
fig. 2 shows schematically a flow sheet where the purchase and sale interests of the owners of the cars are such that they form a consecutive series in form of a loop,
fig. 3 shows schematically a flow sheet illustrating one way of mending a consecutive series that has been broken due to the resign of one of the traders, and
fig. 4 shows schematically a flow sheet illustrating another way of mending a broken consecutive series by substituting the resigning trader with another one with similar trade interests.

In the following the invention is described by way of example using a car as a sales object. This is only to be seen as an example and other objects and traders can be matched in a similar way. Although the advantages of the present invention is particular clear for expensive objects, cheap objects can also be traded using the above described method and system.

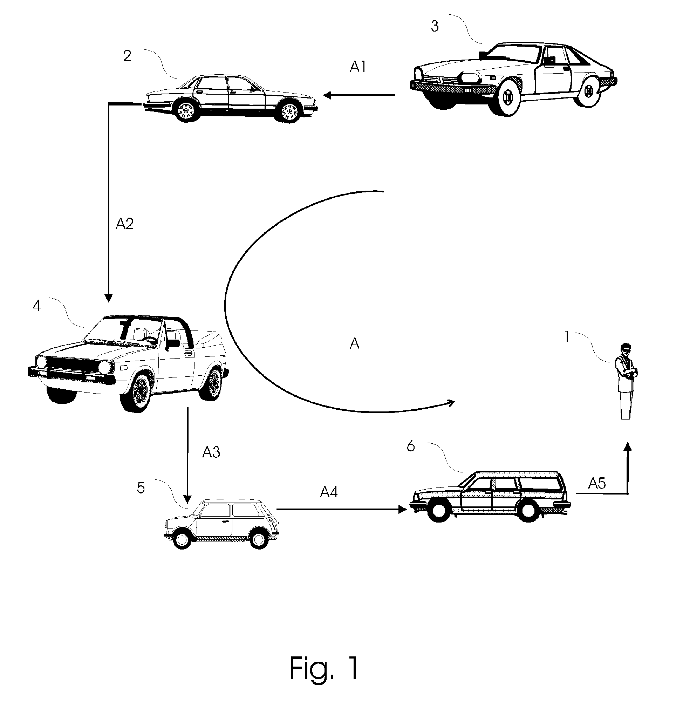

Fig. 1 shows a very simple embodiment of the invention. In chain A car owners want to sell and purchase cars, however the first purchaser 1 does not have an object to sell. Hence, the first purchaser 1 is only interested in purchasing, not selling

Each car represents an owner, who is the owner before the trade. The arrows A1,A2,A3,A4 point in the direction in which the cars move during the trade. The computer-based data processing method identifies a consecutive series of intermediate vendor data sets and purchaser data sets. This is done by identifying a first intermediate trader 2, having a first intermediate vendor data set and a first intermediate purchaser data set. Matching the latter purchaser data set with at least one first vendor 3's vendor data set there is a first connection. If there is no match between first intermediate vendor data set and first purchasers 1's purchaser data set, which is the case in fig. 1, the method identifies a second intermediate trader 4 having a second intermediate purchaser data set matching the first intermediate vendor data set, and repeating the matching through intermediate trader 5 until an intermediate trader 6 is found with an intermediate purchaser data set that matches the at least one first purchaser 1's purchaser data set.

In that way there is no one in chain A that needs to purchase a car before or after the previous car has been sold. Through the system the users can determine a day and place to do the trade and exchange the cars and settle the deals.

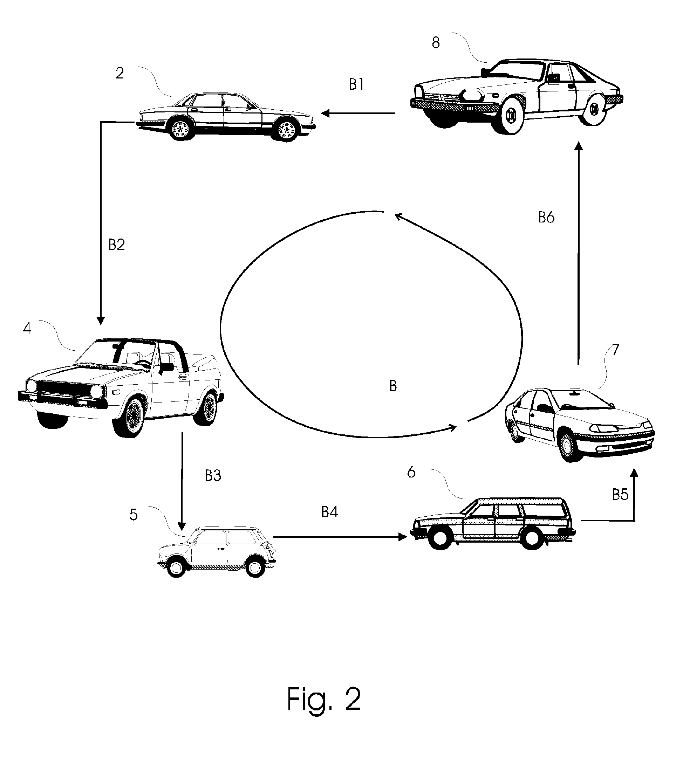

Fig. 2 shows another situation corresponding substantially to the situation in fig. 1 but where the first purchaser 7 now in addition has an object to sell. The first purchaser has a vendor data set and the first vendor 8 has in addition to his/her vendor data set a purchaser data set that match the first purchaser's vendor data set, as indicated by arrow B6. Thus, all users want to both purchase and sell a car and instead of an open-ended chain A1,A2,A3,A4 fig. 2 illustrates a closed loop B1,B2,B3,B4,B5,B6.

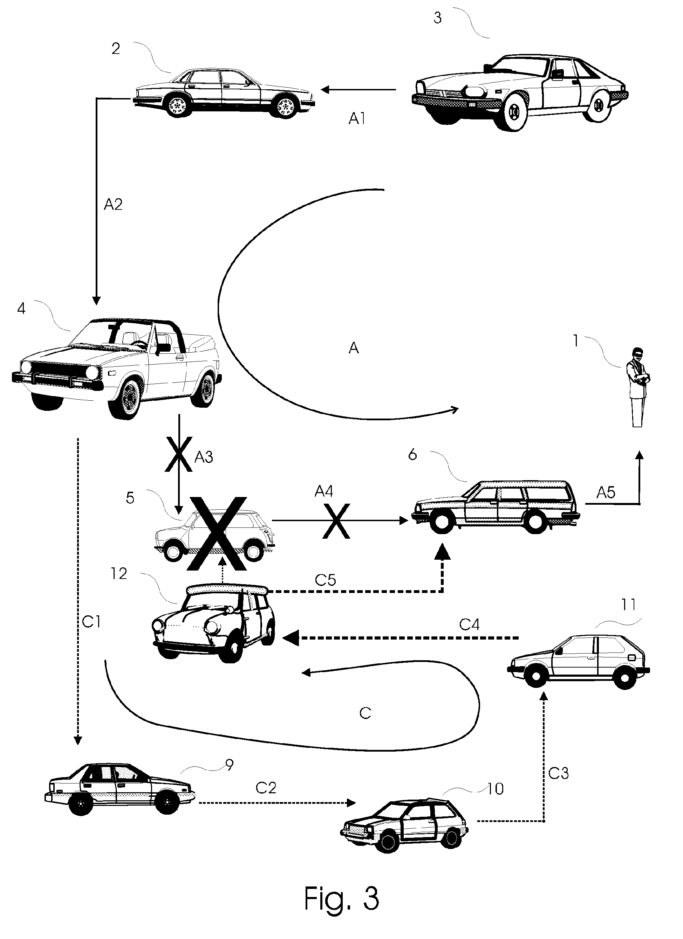

In Fig. 3 intermediate trader 3 has resigned from the database. Consequently, the chain A is broken, as indicated by crosses over arrows A3 and A4 in fig. 3 and subsidiary consecutive series chain C indicated with dashed arrows C1, C2,C3,C4,C5 is created automatically. In chain C intermediate traders 9,10,11 and 12 connect intermediate traders 2 and 4.

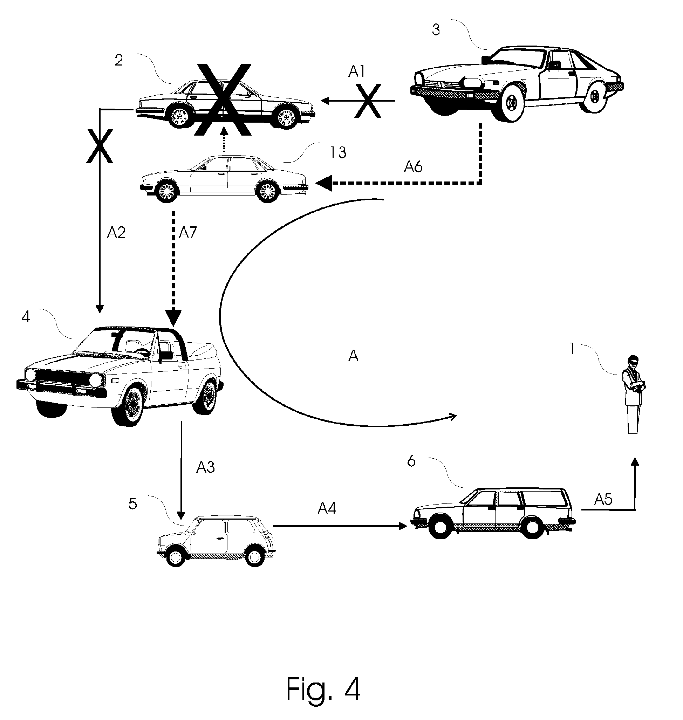

It is also possible that intermediate traders with similar purchase interests and sale objects are grouped in a hierarchic order of decreasing matching degree. If the intermediate trader having the highest matching degree of a hierarchic group, e.g. intermediate trader 2 in fig. 4, leaves the group the next intermediate trader 13, automatically becomes the substitute.

The present invention provides a data processing system and a method to maintain a system for trading objects.

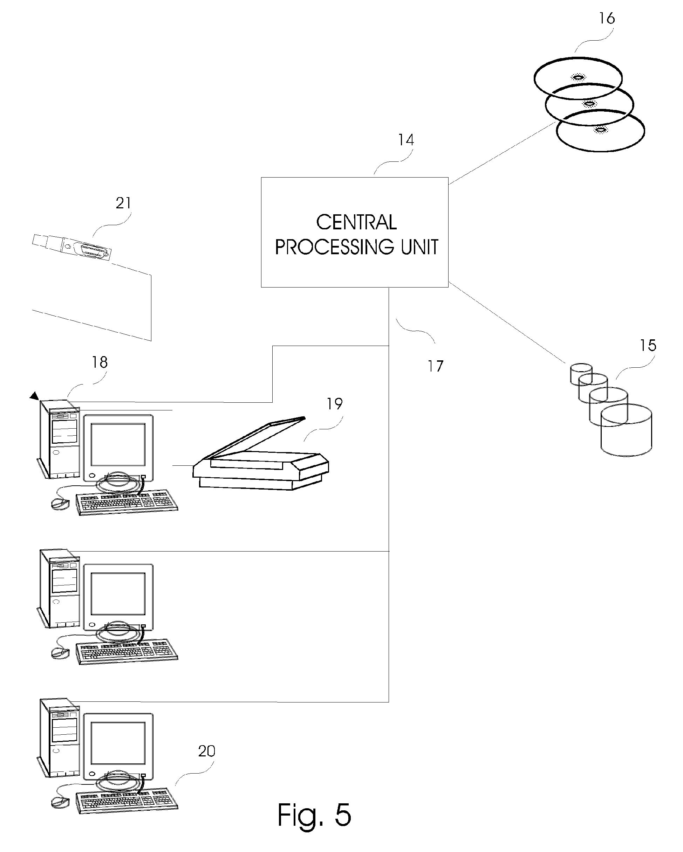

A schematic diagram of the system configuration is shown in fig. 5. The system comprises processing means in the form of a central processor unit, a CPU 14. Further, the system comprises storage means, which can be hard discs 15 or laser discs 16 connected and in communication with the processing means 14. An Internet connection 17 provides access to the system from the home computers 18. Submitting means in the form of a scanner 19 and a keyboard 20 connected to the computers enables entering of data parameters, such as purchase data sets and vendor data sets. To reduce the risk that several users, some of them not legally, locks onto the system and uses a password without authorized permission, a hardwarelock 21 is provided that must be attached to the home computer to enable the user to use the system. From the home computer the user logs on and enters the required data information about the objects to be traded. The system has means for identifying and selecting a consecutive series among the submitted data of particular relevance, which means is a computer program.

## Claims

1. A computer-based data processing method for processing sets of data for identifying and describing a plurality of sales objects and purchase objects from traders (1,2,3,4,5,6,7,8,9,10,11,12,13), which method comprises that
- at least one first vendor (3) submits at least one first vendor data set for at least one first sales object to a database on a data storage means,
- at least one first purchaser (1) submits at least one first purchaser data set for at least one first purchase object to a database on the data storage means, and
- processing and matching the vendor data sets and the purchaser data sets to identify at least the best match for the at least one first vendor data set and the at least one first purchaser data set stored in the database, **characterised in that** the method comprises
- identifying a consecutive series of intermediate vendor data sets and purchaser data sets, wherein identifying a consecutive series comprises the steps of
- identifying a first intermediate trader (2,3,4) having a first intermediate vendor data set and a first intermediate purchaser data set,
- matching the first intermediate purchaser data set with the at least one first vendor (3)'s vendor data set,
- if there is no match between first intermediate vendor (4) data set and first purchaser (1)'s purchaser data set, identifying a second intermediate trader (4) having a second intermediate purchaser data set matching the first intermediate vendor data set, and
- repeating the matching until an intermediate purchaser data set matches the at least one first purchaser (1)'s purchaser data set.

2. A computer-based data processing method according to claim 1, **characterised in that** first vendor (3) has a purchaser data set that matches first purchaser (1)'s vendor data set.

3. A computer-based data processing method according to any of the claims 1 or 2, **characterised in that** if an intermediate trader (2.4.5) resigns from the database, a subsidiary consecutive series is created automatically.

4. A computer-based data processing method according to any of the preceding claims 1, 2 or 3, **characterised in that** an intermediate trader (2) is extended to a hierarchic group of intermediate traders (2,13) of decreasing matching degree, wherein if the intermediate trader (2) having the highest matching degree of the hierarchic group leaves the group the next intermediate trader (13) automatically becomes the substitute.

5. A computer-based data processing method according to any of the preceding claims 1 - 4, **characterised in that** the sales objects and purchase objects are selected from the group comprising real estate, cars, boats, airplanes, and travel tickets.

6. A computer-based data processing method according to any of the preceding claims 1 - 5, **characterised in that** the sets of data for identifying and describing a plurality of sales objects and purchase objects from traders (1,2,3,4,5,6,7,8,9,10,11,12,13) comprises information from comprising at least identification of the sales or purchase object, identification of the trader, costs, and time window.

7. A computer-based data processing system for processing sets of data identifying and describing a plurality of sales objects and purchase objects from traders, which system comprises
- means (18) for submitting at least one first vendor data set for at least one first sales object of at least one first vendor (1) to a database on a data storage means,
- means for submitting at least one first purchaser data set for at least one first purchase object of at least one first purchaser to a database on the data storage means 15;16), and
- means for processing and matching (14) the vendor data sets and the purchaser data sets to identify at least the best match for the at least one first vendor data set and the at least one first purchaser data set stored in the database,
**characterised in that** the system comprises,
- means for identifying a consecutive series of intermediate vendor data sets and purchaser data sets, wherein the means for identifying a consecutive series comprises
- means for identifying a first intermediate trader having a first intermediate vendor data set and a first intermediate purchaser data set, means for matching the first intermediate purchaser data set with the at least one first vendor's vendor data set,
- means for identifying a second intermediate trader having a second intermediate purchaser data set matching the first intermediate vendor data set if there is no match between first intermediate vendor data set and first purchaser's purchase data set, and
- means for repeating the matching until an intermediate vendor data set matches the at least one first purchaser's purchaser data set.

8. A computer-based data processing system according to claim 7, **characterised in that** first vendor has a purchaser data set that matches first purchaser's vendor data set.

9. A computer-based data processing system according to any of the claims 7 and 8, **characterised in that** the means for identifying a trader, the means for processing and matching the vendor data sets and the purchaser data sets, and the means for identifying a consecutive series of intermediate vendor data sets and purchaser data sets include computer programs executed on the computer (18).

10. A computer-based data processing system according to claim 9, **characterised in that** the computer programs are stored on a central computer, mainframe and/or on a backup system.

11. A computer-based data processing system according to any of the preceding claims 7 - 10, **characterised in that** the computer-based data processing system comprises means for online access via the Internet (7).

12. A computer-based data processing system according to claim 11, **characterised in that** the means for obtaining online access to the system comprises a hardware lock (21) means or a user interface means requiring passwords and user ID.
